(19) Europäisches Patentamt
European Patent Office
Office européen des brevets

(11) Veröffentlichungsnummer: **0 244 687 B1**

(12) **EUROPÄISCHE PATENTSCHRIFT**

(45) Veröffentlichungstag der Patentschrift: **09.12.92**

(51) Int. Cl.[5]: **C09B 41/00**, //C09B29/10

(21) Anmeldenummer: **87105766.7**

(22) Anmeldetag: **18.04.87**

(54) **Verfahren zur Herstellung von Azopigmenten.**

(30) Priorität: **03.05.86 DE 3615100**

(43) Veröffentlichungstag der Anmeldung:
**11.11.87 Patentblatt 87/46**

(45) Bekanntmachung des Hinweises auf die Patenterteilung:
**09.12.92 Patentblatt 92/50**

(84) Benannte Vertragsstaaten:
**BE CH DE ES FR GB IT LI**

(56) Entgegenhaltungen:
**DE-A- 2 629 076**
**DE-B- 1 085 278**
**GB-A- 2 129 434**
**US-A- 2 174 954**
**US-A- 4 395 264**

**CHIMIA, Band 15, Januar 1961, Seiten 156-163, Arau, CH; H. NAKATEN: "Kontinuierliche Herstellung von Azofarbstoffpigmenten"**

(73) Patentinhaber: **HOECHST AKTIENGESELLSCHAFT**
**Postfach 80 03 20**
**W-6230 Frankfurt am Main 80(DE)**

(72) Erfinder: **Rehberg, Heinrich, Dr.**
**Volkerstrasse 3**
**W-5030 Huerth(DE)**
Erfinder: **Behringer, Hartmut, Dr.**
**Rotdornweg 6**
**W-5042 Erftstadt(DE)**

EP 0 244 687 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Azo-Pigmente werden bevorzugt durch eine Azokupplungsreaktion von Diazoniumverbindungen mit Kupplungskomponenten wie aromatischen Aminen, Acetessigsäurearyliden, Naphtholen, Phenolen oder Pyrazolonen hergestellt. Dies geschieht meist durch Zusammenmischen der Ausgangsstoffe in wäßriger Phase. Derartige Umsetzungen sind seit langem aus jedem Lehrbuch der organischen Chemie bekannt, vgl. z.B. Louis und Mary Fieser, Organische Chemie, Verlag Chemie, Weinheim/Bergstr. 1965, Seiten 890 ff., 1431, 1796 ff.

Besondere Probleme entstehen bei der Kupplung solcher Kupplungskomponenten, die im wäßrigen System schwerlöslich sind. Um solche Kupplungskomponenten zur Reaktion zu bringen, muß man für eine möglichst feine Verteilung der Kupplungskomponente sorgen. Dies geschieht durch Zugabe von Dispergiermitteln, Emulgatoren oder Lösemitteln, z.B. Alkoholen, durch Mahlung oder Ausfällung der Kupplungskomponenten, die in stark alkalischen Medien löslich sind und durch Zugabe von Säure gefällt werden können. Häufig führt die Schwerlöslichkeit der Kupplungskomponente zu Einschlüssen im gebildeten Pigment, wobei die Schwierigkeiten, reine Pigmente herzustellen, mit der Abnahme der Löslichkeit des Pigments im Reaktionssystem zunehmen.

Üblicherweise läßt man die im sauren pH-Bereich stabilere Diazoniumsalzlösung in die Lösung oder Suspension der Kupplungskomponente einlaufen, wobei die bei der Azokupplungsreaktion freigesetzte Säure und die in der Diazoniumsalzlösung vorhandene überschüssige Säure durch Zugabe von Basen neutralisiert wird, um einen gewünschten pH-Wert einzuhalten. Da an der Einlaufstelle der sauren Diazoniumsalzlösung immer ein anderer pH-Wert herrscht als nach der vollkommenen Durchmischung, beeinflussen auch Rührertyp und Rührgeschwindigkeit die Nebenproduktbildung und damit die Coloristik des gewünschten Pigments. Zur Vermeidung von Nebenreaktionen wird stets darauf geachtet, daß in der Reaktionsmischung keine überschüssige Diazoniumverbindung nachzuweisen ist.

"Die DE-B-1085278 beschreibt ein Verfahren zur Herstellung von Azopigmenten in pH-Bereichen, in denen die Azokomponente (= Kupplungskomponente) praktisch keine löslichen Salze bildet. Dabei führt man die Lösungen einer Diazoverbindung sowie einer Azokomponente gleichzeitig kontinuierlich einem Reaktionssystem zu, das bereits gekuppelte Farbstoffsuspension enthält. Die Zuführungsgeschwindigkeit der Komponenten wird so geregelt, daß die abfließende Farbstoffsuspension keine wesentlichen Anteile nicht umgesetzter Farbstoffkomponenten enthält."

Überraschenderweise wurde gefunden, daß reine Azopigmente ohne Einschluß nicht umgesetzter Kupplungskomponenten reproduzierbar erhalten werden können, wenn man äquivalente Mengen einer wäßrig-sauren Diazoniumsalzlösung mit einer wäßrigen, reaktiven Suspension einer im wäßrig-neutralen bis wäßrig-sauren pH-Bereich schwerlöslichen Kupplungskomponente unter bestimmten Reaktionsbedingungen sehr rasch zusammenmischt. Als schwerlöslich sind Kupplungskomponenten anzusehen, deren Löslichkeit bei pH 7 kleiner als 0,1 Gew% ist.

Im einzelnen betrifft die Erfindung nunmehr ein Verfahren zur Herstellung von Azopigmenten durch Azokupplungsreaktion einer Diazokomponente mit der äquivalenten Menge einer im wäßrig-sauren und wäßrig-neutralen pH-Bereich unterhalb 65 °C schwerlöslichen Kupplungskomponente, welches dadurch gekennzeichnet ist, daß man in einem ersten Reaktionsschritt eine wäßrig-alkalische Lösung der Kupplungskomponente mit einer wäßrigen Lösung einer Säure aus der Gruppe Essigsäure, Borsäure, Phosphorsäure, Salzsäure oder Schwefelsäure bei einer Temperatur unterhalb 65 °C in einer Zeitspanne von weniger als 1 Minute kontinuierlich mischt, wobei die Kupplungskomponente zumindest teilweise in reaktiver Form ausfällt, und in einem unmittelbar anschließenden zweiten Reaktionsschritt die entstandene Suspension mit einer wäßrig-sauren Lösung der Diazokomponente bei einer Temperatur unterhalb 65 °C in einer Zeitspanne von weniger als 1 Minute kontinuierlich mischt und durch Steuerung der Massenströme der Diazokomponente und der Kupplungskomponente einen bestimmten pH-Wert zwischen 2 und 9 einstellt, wodurch ein Teil der Kupplungskomponente sofort zum gewünschten Azopigment umgesetzt wird, während der Rest erst in einer Nachreaktionsphase mit noch nicht umgesetzter Diazokomponente zum gewünschten Axopigment umgesetzt wird.

Weiterhin kann das Verfahren der Erfindung bevorzugt und wahlweise dadurch gekennzeichnet sein, daß

a) im zweiten Reaktionsschritt die Zeitspanne des kontinuierlichen Mischens weniger als 6 Sekunden beträgt;

b) im zweiten Reaktionsschritt die Einstellung des bestimmten pH-Werts durch Zufügung von Puffersubstanzen unterstützt wird,

c) im zweiten Reaktionsschritt 60 bis 98 % der Kupplungskomponente sofort zum gewünschten Azopigment umgesetzt werden;

d) im zweiten Reaktionsschritt die Tempeatur während der Azokupplungsreaktion einschließlich der Nachreaktionsphase 10 bis 55 °C beträgt;

e) die im ersten Reaktionsschritt in reaktiver Form ausgefallene Kupplungskomponete an ihrer Teilchenoberfläche je nach ihrer chemischen Zusammensetzung Enolat-, Phenolat- oder Naphtholatgruppen trägt.

Im ersten Verfahrensschritt der Erfindung wird eine wäßrig-alkalische Lösung der schwerlöslichen Kupplungskomponente innerhalb einer Zeitspanne, die kleiner ist als eine Minute, mit einer wäßrigen, ggf. einen Puffer bildenden Säurelösung bei Temperaturen unterhalb 65 °C vermischt, wobei der resultierende pH-Wert im schwach sauren bis alkalischen Bereich (pH 4 bis 11) liegt. Dabei wird die Kupplungskomponente zumindest teilweise in einer reaktiven Form ausgefällt,die reaktionsfähiger ist als Partikel der reinen Kupplungskomponente. Die Oberfläche dieser gleichmäßig feinkristallinen Teilchen ist je nach der chemischen Natur der Kupplungskomponente mit Phenolat-, Enolat- oder Naphtholat-Gruppen besetzt, die eine Verschiebung der Elektronendichte innerhalb der kristallinen Partikel bewirken und dadurch eine besondere Reaktionsfähigkeit zur Folge haben. Unmittelbar an den Vermischungsvorgang, verbunden mit der Ausfällung von Kupplungskomponente, wird die daraus resultierende wäßrige Suspension mit der äquivalenten Menge einer wäßrig-sauren Diazoniumsalzlösung bei einer Temperatur unterhalb 65 °C in einer Zeitspanne, die kleiner als eine Minute ist, vermischt, wobei der resultierende pH-Wert zwischen 2 und 9 liegt. Eine weitere Eingrenzung dieses Bereichs ist produktspezifisch abhängig von der Diazokomponente und der Kupplungskomponente. Je stabiler die Diazokomponente und je geringer die Löslichkeit der Kupplungskomponente im neutralen pH-Bereich, desto höher darf bzw. muß der pH-Wert in den angegebenen Grenzen gewählt werden.

Ein Teil des gewünschten Azopigmentes wird sofort beim Vermischen gebildet, während ein anderer Teil in einer Nachreaktionsphase in Abhängigkeit von den spezifischen Eigenschaften der Ausgangskomponenten aus noch vorhandener Diazo-Verbindung und in reaktiver Form ausgefällter Kupplungskomponente entsteht. Obwohl ein Überschuß an Diazokomponente nach dem Stand der Technik schädlich sein sollte, wurde überraschend gefunden, daß innerhalb des produktspezifisch gewählten pH- und Temperaturbereiches bei der erfindungsgemäß raschen Durchmischung von weniger als 1 Minute keine Zersetzung der Diazoniumkomponente über eine angemessene Zeitspanne von 0,01 - 1 Stunde eintritt, wobei diese Zeitspanne ausreichend groß ist, um in einer Nachreaktionsphase die vollständige Kupplung des in reaktiver Form ausgefällten Anteils der Kupplungskomponente zu ermöglichen. Die Dauer der Nachreaktionsphase liegt je nach Produkt bei 0,01 bis 1 Stunde. Oft ist es vorteilhaft, durch Rückführung eines Teiles des aus der Mischvorrichtung austretenden Produktes die Durchmischung zu fördern und die Verweilzeit in der Mischvorrichtung zu steuern. Die Rückführung kann auch über ein Zwischengefäß erfolgen.

Zur Herstellung der Diazokomponente kann z.B. ausgegangen werden von 2,5-Dichloranilin; 2-Chlor-4-nitroanilin; 5-Nitro-2-aminoanisol oder 3-Nitro-4-aminotoluol. Als Kupplungskomponente kann z.B. eingesetzt werden: 2-Hydroxy-3-naphthoesäureanilid; ß-Naphthol oder Acetessigsäure-o-anisidid.

Beispiel 1 (vgl. die Zeichnung)

Herstellung von 2-(2-Methoxy-4-nitrophenylazo)-N-(2-methoxyphenyl)-3-oxobutanimid der Formel

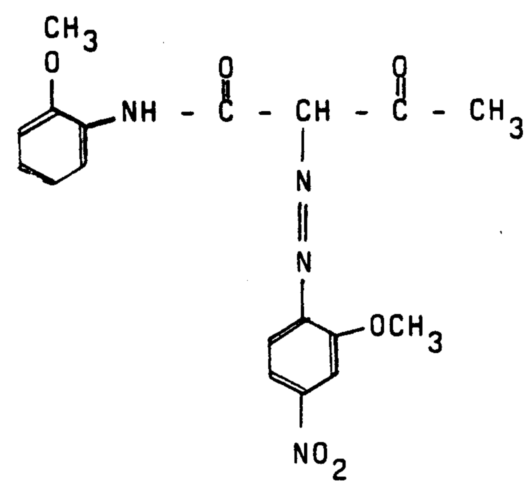

134 g (= 0,80 mol)5-Nitro-2-aminoanisol der Formel

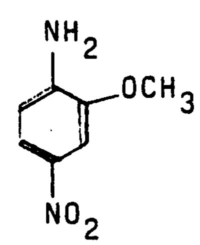

werden in 250 ml Wasser und 210 ml Salzsäure (31 Gew%) suspendiert, durch Zugabe von 400 g Eis gekühlt und mit 113 ml Natriumnitritlösung (40 Gew%) bei 5 - 10 °C diazotiert. Nach Zusatz von 5 g Filterhilfs- und Klärmittel (Kieselgur und Aktivkohle) wird die Lösung filtriert und im Behälter (10) mit Eiswasser auf 2 Liter aufgefüllt. Anschließend wird der Nitritüberschuß durch Zugabe von Amido-

schwefelsäure (Amino-sulfonsäure $H_2N\text{-}SO_2OH$) fast ganz abgebaut.

Im Behälter (11) werden 172 g (= 0,83 mol) Acetessigsäure-o-anisidid der Formel

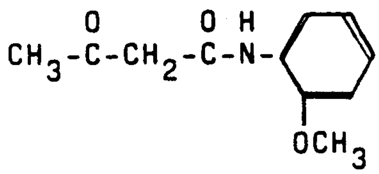

in 530 ml Wasser suspendiert und durch Zugabe von 200 ml Natronlauge (25 Gew%) gelöst. Diese Lösung wird auf 10 °C gekühlt und mit Wasser auf 1000 ml aufgefüllt. Innerhalb von 2 Stunden wird diese Lösung aus dem Behälter (11) gleichzeitig mit einer aus Leitung (12) herangeführten Mischung aus 152 ml Essigsäure (60 Gew%) und 400 ml Wasser in einen Mischer (13) geleitet. Die Zugabe der verdünnten Essigsäure als Puffersubstanz wird durch eine pH-Sonde am Ausgang des Mischers (13) so gesteuert, daß ein pH-Wert von 5,5 resultiert. Dabei fällt ein Teil der Kupplungskomponente in reaktiver Form aus.

Der Abfluß des Mischers (13) wird in einen Mischer (14) geleitet und innerhalb von 2 Stunden bei 10 °C mit der Diazoniumsalzlösung aus dem Behälter (10) vermischt. Das aus Mischer (14) auslaufende Produkt wird über Leitung (15) abgezogen und in einem Sammelgefäß (16) aufgefangen. Die Verweilzeit in den Mischern (13) und (14) beträgt jeweils 1 Sekunde.

Der Mischungsvorgang im Mischer (14) wird durch einen Hilfsstrom von Sammelgefäß (16) durch Rücklaufleitung (17) zum Mischer (14) unterstützt, dessen Menge das zehnfache Volumen der stündlich eingesetzten Diazoniumsalzmenge beträgt. Der pH-Wert im Sammelgefäß (16) beträgt 3,6 und die Temperatur wird durch Eiszugabe bei 10 °C gehalten.

Nach Beendigung der Komponenten-Zugabe aus den Behältern (10), (11) und Leitung (12) läßt man den Ansatz im Sammelgefäß (16) 20 min bei 20 °C nachreagieren, bis keine Diazoverbindung mehr nachzuweisen ist.

Das aus dem Sammelgefäß (16) über Leitung (18) durch Filtration abgetrennte und bei 100 °C getrocknete Azopigment (302 g = 0,78 mol) weist keine Kupplungskomponenteneinschlüsse und eine um 10 % höhere Farbstärke auf, als nach dem üblichen Verfahren erreichbar ist.

Beispiel 2 (vgl. die Zeichnung)

Herstellung von 1-(2-Nitro-4-methylphenylazo)-2-hydroxynaphthalin der Formel

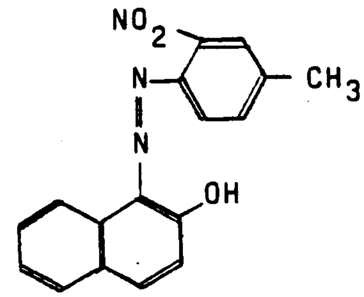

80 g (= 0,526 mol) 3-Nitro-4-aminotoluol der Formel

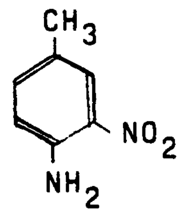

werden is 500 ml Wasser und 126 ml Salzsäure (31 Gew%) suspendiert und bei 5 °C mit 69 ml Natriumnitritlösung (40 Gew%) diazotiert. Nach Zugabe von 5 g Filterhilfs- und Klärmittel (Kieselgur, Aktivkohle) wird die Diazoniumsalzlösung filtriert und mit Wasser auf 2000 ml aufgefüllt. Der Nitritüberschuß wird mit Amidoschwefelsäure ($H_2N$ - $SO_2OH$) fast ganz abgebaut und die Diazoniumsalzlösung bei 5 °C im Behälter (10) aufbewahrt.

In dem Behälter (11) werden 75 g ß-Naphthol (0,521 mol) in 500 ml Wasser und 186 ml Natronlauge (25 Gew%) gelöst, die Lösung auf 10 °C abgekühlt und auf 1500 ml aufgefüllt. Innerhalb von 2 Stunden wird diese Lösung aus dem Behälter (11) gleichzeitig mit einer aus Leitung (12) herangeführten Lösung aus 24 g Phosphorsäure (85 Gew%) als Puffersubstanz in 500 ml Wasser in einen Mischer (13) geleitet, wodurch ein Teil der Kupplungskomponente in reaktiver Form ausfällt.

Der Abfluß des Mischers (13) wird in einen Mischer (14) geleitet und bei 10 - 15 °C mit der Diazoniumsalzlösung aus dem Behälter (10) vermischt. Das aus Mischer (14) auslaufende Produkt wird über die Leitung (15) abgezogen und in einem Sammelgefäß (16) aufgefangen. Die Verweilzeit in den Mischern (13) und (14) beträgt 6 bzw. 2 Sekunden.

Der Mischungsvorgang im Mischer (14) wird durch einen Hilfsstrom von Sammelgefäß (16) durch Rücklaufleitung (17) zum Mischer (14) unterstützt, dessen Menge das zehnfache Volumen der stündlich eingesetzten Diazoniumsalzmenge beträgt. Zur Einleitung des Hilfsstroms beim Ingangsetzen der Reaktion werden in dem Sammelgefäß (16) 250 ml Wasser vorgelegt.

In dem Sammelgefäß (16) wird ein pH-Wert von 8,5 - 8,8 gemessen und durch Feinkorrektur der Massenströme der sauren Diazoniumsalzlösung und der alkalischen Kupplungskomponentenlösung aufrechterhalten.

Am Austritt des Mischers (14) wird ein Umsatz der Diazokomponente zum gewünschten Azopigment von ca. 98 % festgestellt, der in einer Nachreaktion von 0,6 min Dauer quantitativ wird.

Das so erhaltene Azopigment weist nach dem Filtrieren der Suspension aus dem Sammelbehälter (16) über Leitung (18) und Trochnen bei 110 °C eine hohe Brillanz auf. Es werden 156 g Azopigment (0,51 mol) erhalten.

**Patentansprüche**

1. Verfahren zur Herstellung von Azopigmenten durch Azokupplungsreaktion einer Diazokomponente mit der äquivalenten Menge einer im wäßrig-sauren und wäßrig-neutralen pH-Bereich unterhalb 65 °C schwerlöslichen Kupplungskomponente, dadurch gekennzeichnet, daß man in einem ersten Reaktionsschritt eine wäßrig-alkalische Lösung der Kupplungskomponente mit einer wäßrigen Lösung einer Säure aus der Gruppe Essigsäure, Borsäure, Phosphorsäure, Salzsäure oder Schwefelsäure bei einer Temperatur unterhalb 65 °C in einer Zeitspanne von weniger als 1 Minute kontinuierlich mischt, wobei die Kupplungskomponente zumindest teilweise in reaktiver Form ausfällt, und in einem unmittelbar anschließenden zweiten Reaktionsschritt die entstandene Suspension mit einer wäßrig-sauren Lösung der Diazokomponente bei einer Temperatur unterhalb 65 °C in einer Zeitspanne von weniger als 1 Minute kontinuierlich mischt und durch Steuerung der Massenströme der Diazokomponente und der Kupplungskomponente einen bestimmten pH-Wert zwischen 2 und 9 einstellt, wodurch ein Teil der Kupplungskomponente sofort zum gewünschten Azopigment umgesetzt wird, während der Rest erst in einer Nachreaktionsphase mit noch nicht umgesetzter Diazokomponente zum gewünschten Azopigment umgesetzt wird.

2. Verfahren nach Anspruch 1, dadurch gekennzeichnet, daß im zweiten Reaktionsschritt die Zeitspanne des kontinuierlichen Mischens weniger als 6 Sekunden beträgt.

3. Verfahren nach Anspruch 1 oder 2, dadurch gekennzeichnet, daß im zweiten Reaktionsschritt die Einstellung des bestimmten pH-Werts durch Zufügung von Puffersubstanzen unterstützt wird.

4. Verfahren nach mindestens einem der vorhergehenden Ansprüche, dadurch gekennzeichnet, daß im zweiten Reaktionsschritt 60 bis 98 % der Kupplungskomponente sofort zum gewünschten Azopigment umgesetzt werden.

5. Verfahren nach mindestens einem der vorhergehenden Ansprüche, dadurch gekennzeichnet, daß im zweiten Reaktionsschritt die Temperatur während der Azokupplungsreaktion einschließlich der Nachreaktionsphase 10 bis 55 °C beträgt.

6. Verfahren nach mindestens einem der vorhergehenden Ansprüche, dadurch gekennzeichnet, daß die im ersten Reaktionsschritt in reaktiver Form ausgefallene Kupplungskomponente an ihrer Teilchenoberfläche je nach ihrer chemischen Zusammensetzung Enolat-, Phenolat- oder Naphtholatgruppen trägt.

**Claims**

1. A process for the preparation of azo pigments by azo coupling reaction of a diazo component with the equivalent amount of a coupling component which is sparingly soluble in the aqueous-acidic and aqueous-neutral pH range below 65 °C, which comprises continuously mixing, in a first reaction step, an aqueous-alkaline solution of the coupling component with an aqueous solution of an acid from acetic acid, boric acid, phosphoric acid, hydrochloric acid or sulfuric acid at a temperature below 65 °C over a period of less than 1 minute, at least some of the coupling component precipitating in reactive form and continuously mixing, in an immediately following, second reaction step, the suspension formed with an aqueous-acid solution of the diazo component at a temperature below 65 °C over a period of less than 1 minute, and bringing the pH to a specified value of between 2 and 9 by controlling the mass flows of the diazo component and of the coupling component, as a result of which some of the coupling component is converted to the desired azo pigment immediately, while the remainder is not converted into the desired azo pigment until it is reacted with still uncoverted diazo pigment in a postreaction phase.

2. The process as claimed in claim 1, wherein the continuous mixing period in the second reaction step is less than 6 seconds.

3. The process as claimed in claim 1 or 2, wherein the adjustment of the specified pH

value in the second reaction step is aided by the addition of buffer substances.

4. The process as claimed in at least one of the preceding claims, wherein 60 to 98% of the coupling component is immediately converted to the desired azo pigment in the second reaction step.

5. The process as claimed in at least one of the preceding claims, wherein the temperature during the azo coupling reaction, including the post reaction phase, in the second reaction step is 10 to 55 ° C.

6. The process as claimed in at least one of the preceding claims, wherein the coupling component precipitated in the first reaction step in reactive form carries, on its particle surface, depending on its chemical composition, enolate, phenolate or naphtholate groups.

**Revendications**

1. Procédé de préparation de pigments azoïques par copulation azoïque d'un constituant diazoïque avec une quantité équivalente d'un copulant peu soluble en-dessous de 65 ° C dans un milieu aqueux de pH acide et neutre, caractérisé en ce que, dans une première étape réactionnelle, on mélange en l'espace de moins d'une minute, de façon continue, à une température inférieure à 65 ° C, une solution aqueuse alcaline du copulant avec une solution aqueuse d'un acide du groupe constitué par l'acide acétique, l'acide borique, l'acide phosphorique, l'acide chlorhydrique et l'acide sulfurique, ce qui entraîne une précipitation au moins partielle du copulant sous forme réactive, et en ce que, dans une deuxième étape réactionnelle immédiatement subséquente, on mélange de façon continue, en l'espace de moins d'1 minute, à une température inférieure à 65 ° C, la suspension formée avec une solution aqueuse acide du constituant diazoïque et on ajuste le pH à une valeur déterminée comprise entre 2 et 9 en réglant les débits massiques du constituant diazoïque et du copulant, grâce à quoi une partie du copulant se transforme aussitôt en le pigment azoïque désiré, alors que le reste ne réagit que dans une phase de réaction ultérieure avec le constituant diazoïque n'ayant pas encore réagi pour donner le pigment azoïque désiré.

2. Procédé selon la revendication 1, caractérisé en ce que, dans la deuxième étape réactionnelle, la durée du mélange en continu est inférieure à 6 secondes.

3. Procédé selon la revendication 1 ou 2, caractérisé en ce que, dans la deuxième étape réactionnelle, le réglage de la valeur du pH déterminée est facilité par l'introduction de substances tampons.

4. Procédé selon au moins l'une des revendications précédentes, caractérisé en ce que, dans la deuxième étape réactionnelle, 60 à 98 % du copulant sont transformés aussitôt en le pigment azoïque désiré.

5. Procédé selon l'une au moins des revendications précédentes, caractérisé en ce que, dans la deuxième étape réactionnelle, la température est de 10 à 55 ° C pendant la réaction de copulation azoïque, y compris pendant la phase de réaction ultérieure.

6. Procédé selon l'une au moins des revendications précédentes, caractérisé en ce que, dans la première étape du procédé, le copulant précipité sous forme réactive porte sur la surface de ses particules, en fonction de sa composition chimique, des groupes énolate, phénolate ou naphtolate.

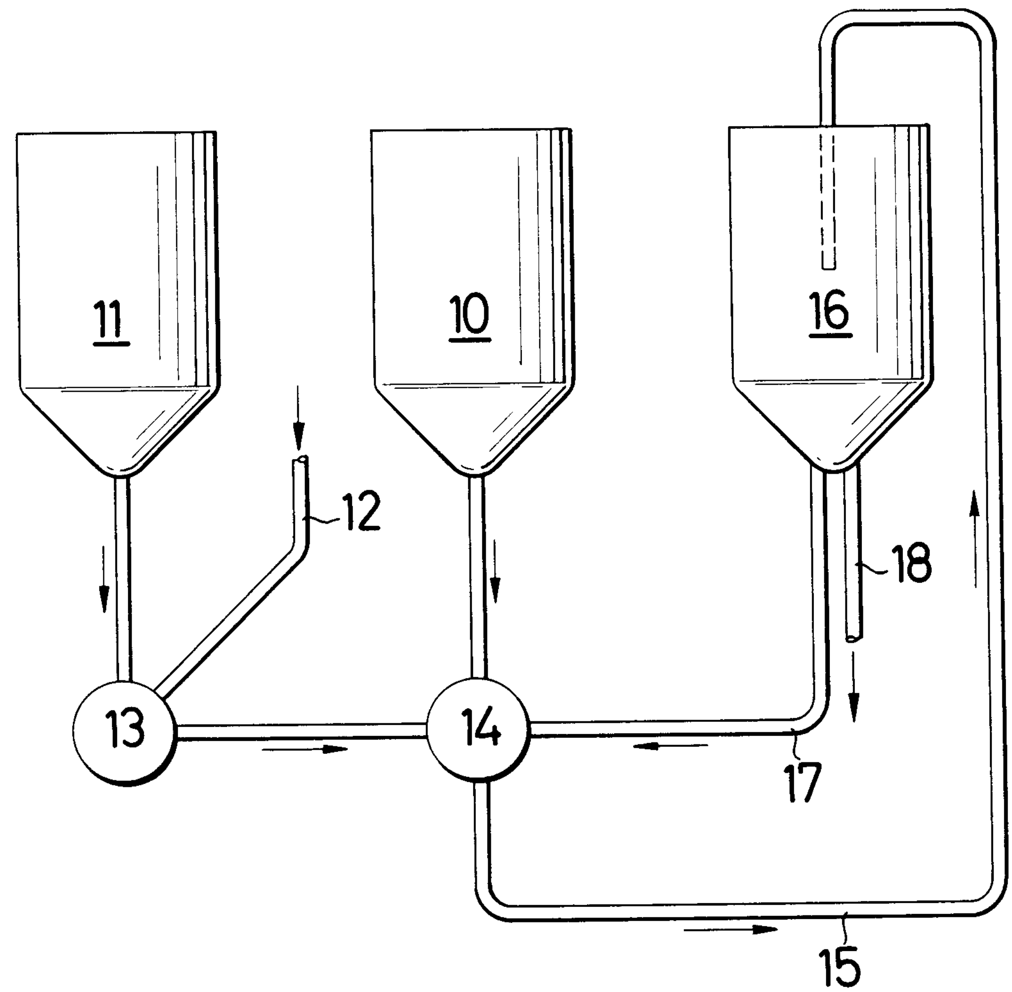
11
10
16
12
18
13
14
17
15